# EUROPÄISCHE PATENTANMELDUNG

(11) **EP 3 795 778 A1**
(43) Veröffentlichungstag der Anmeldung: **24.03.2021**
(21) Anmeldenummer: 19000420.0
(22) Anmeldetag: 19.09.2019
(51) Int. Cl.: E04H 1/12, A61H 33/06

(54) **WÄRMEKABINE**

(71) Anmelder: BodyPhoton GmbH, 61231 Bad Nauheim (DE)
(72) Erfinder: Volz, Hans-Jürgen, 61231 Bad Nauheim (DE)
(74) Vertreter: Borbach, Markus

(57) **Zusammenfassung**

Die vorliegende Erfindung betrifft eine Wärmekabine, beispielsweise eine Sauna. Insbesondere geht es um eine Wärmekabine (10), welche modular aufgebaut ist und eine Vielzahl von Trägern erster Art (20) und von Trägern zweiter Art (40) und eine Vielzahl von Paneelen (32; 34) umfasst und welche sich von einer Bodenebene zu einer Deckenebene erstreckt, wobei sich die Träger erster Art (20) über eine jeweils gleiche Länge von der Bodenebene bis zur Deckenebene erstrecken und sich die Träger zweiter Art (40) über verschiedenen Längen erstrecken und mindestens ein Träger zweiter Art zur Befestigung eines Heizelementes (50) dient. Die Erfindung betrifft ferner zweckmäßige auf eine Wärmekabine bezogene Verfahren.

## Beschreibung

### Gebiet der Erfindung

Die vorliegende Erfindung bezieht sich auf eine Wärmekabine, diese kann beispielsweise eine Sauna sein. Alternativ kann eine Wärmekabine z. B. auch als Kabine für ein Dampfbad gestaltet werden oder als Kabine für körperliches Training oder für Rehabilitation straining bei erhöhter Temperatur.

### Hintergrund der Erfindung

Es gibt eine Vielzahl von Kabinen, welche insbesondere für Sauna- oder Dampfsaunaanwendungen ausgelegt sind. Diese Kabinen haben im Einzelfall nur wenige Quadratmeter Grundfläche, typisch 2 bis 20 oder 4 bis 10 qm (Quadratmeter), meist sind sie insgesamt kleiner als 30 qm und werden in aller Regel ganz oder überwiegend aus Holz gebaut. Typischerweise kommt also eine Holzrahmenkonstruktion zum Einsatz und eine hölzerne Wandverkleidung.

Die österreichische Patentschrift AT 391 803 B offenbart eine sogenannte Hitzebadkabine. Diese Kabine kann für ein reines Saunabad, für ein reines Dampfbad oder auch für ein Kombinationsbad eingesetzt werden. Die Kabine selbst ist zweischalig aufgebaut. Ihre Außenschale soll aus wärmeisolierenden und wasserdampfdichten Wand- und Dachteilen bestehen. Die Innenschale soll atmungsaktiv und feuchtigkeitsbeständig sein. Die Patentschrift offenbart, dass die Außenschale ihrerseits mehrlagig sein kann und eine Außenhaut, eine Innenhaut und dazwischen angeordnetes Isoliermaterial aufweisen kann. Die Innenschale kann beispielsweise aus einer Vielzahl von Nut- und Federbrettern bestehen. Beide Schalen werden miteinander durch eine Leist enkonstruktion verbunden, wobei zweit eilige Abstandshalterleisten offenbart sind.

Diese zweischalige Konstruktion erscheint insgesamt relativ aufwendig. Dies liegt nicht nur am Materialaufwand, sondern auch an der handwerklich anspruchsvollen Verarbeitung. Bei der offenbarten Kabine sind sogar eine Tür mit bogenförmigem Ausschnitt und eine gewölbte Decke vorgesehen. Eine solche Kabine kann durchaus sehr attraktiv und für einzelne Anwendungszwecke völlig angemessen sein. Allerdings ist eine kostengünstige Fertigung, insbesondere dann, wenn ein Handwerker oder kleiner Handwerksbetrieb Kabinen in verschiedener Größe anbieten soll, und diese auch vor Ort angepasst oder zumindest aufgestellt werden sollen, kaum möglich.

Im Übrigen ist bei dieser Wandkonstruktion keine besonders vorteilhafte Aufnahme für Heizelemente vorgesehen. Ein Heizelement könnte allenfalls auf der Innenschale aufgeschraubt werden. Dann ragt das Heizelement deutlich in den Innenraum hinein. In der Regel sind dann auch Gitter oder andere Abstandshalter erforderlich, um Verbrennungen zu vermeiden.

Das US-Patent US 5 407 392 offenbart eine Kältekabine. Diese soll einen zumindest zeitweise attraktiven Aufenthaltsraum für Menschen darstellen. Die Kabine weist eine Rahmenkonstruktion auf, wobei die Rahmen den Kanten der quaderförmigen Kabine folgen. Zwischen diesen Rahmen sollen Glas- oder Plexiglasflächen angebracht werden.

Diese sehr einfache Kabinenkonstruktion erlaubt erkennbar nicht, dass einzelne Wandflächen komplexer gestaltet werden. Es dürfte schwierig sein, auf einer Wandfläche einen Bildschirm vorzusehen. Noch schwieriger wäre es, auf einer Wandfläche ein Heizgerät oder Kühlungsgerät vorzusehen. Die wandbündige Integration solcher Geräte ist gar nicht möglich.

Die vorliegende Erfindung möchte in einfacher und ökonomischer Weise eine Wärmekabine zur Verfügung stellen, welche sich preiswert anbieten und leicht aufbauen lässt. Sie soll insbesondere geeignet sein, Wandflächen leicht und sicher mit verschiedenen Elementen, beispielsweise Heizelementen oder Bildschirmen, auszustatten und auch erlauben, diese Elemente wandbündig zu montieren.

Diese Aufgabe wird durch eine Wärmekabine nach Anspruch 1 gelöst. Vorteilhafter Weiterbildungen sind in den Unteransprüchen angegeben. Die entsprechenden Vorteile weisen die Verfahren nach den Ansprüchen 13 und 14 auf.

### Beschreibung

Die Wärmekabine nach der vorliegenden Erfindung soll modular aufgebaut sein. Sie kann im Sinne des modularen Aufbaus eine große Vielzahl von Teilen umfassen, sie soll insbesondere erfindungsgemäß eine Vielzahl von Trägern erster Art, und eine Vielzahl von Trägern zweiter Art, und ferner eine Vielzahl von Paneelen umfassen. Unter einer Vielzahl ist hier jeweils eine Anzahl von mindestens zwei zu verstehen, wobei in der Regel deutlich mehr jeweilige Träger und Paneele erforderlich sind (also jeweils beispielsweise 3, 4, 5, 10 oder mehr), um insgesamt eine Wärmekabine zu konstruieren.

Die Wärmekabine nach der vorliegenden Erfindung eignet sich gut als Sauna. Alternativ kann eine Wärmekabine z. B. auch als Kabine für ein Dampfbad gestaltet werden oder als Kabine für körperliches Training oder für Rehabilitationstraining bei erhöhter Temperatur. Im Einzelfall könnte eine solche Wärmekabine auch für Behandlungen oder Training unterhalb der Raumtemperatur eingesetzt werden und für solche Anwendungen auch als Kältekabine bezeichnet werden. Die Kabine kann auch Test- und Prüfzwecken dienen. Der Begriff Wärmekabine soll hierin daher auch eine Kältekabine umfassen.

Die Wärmekabine soll sich zwischen einer Bodenebene und einer Deckenebene erstrecken. Die Träger erster Art sollen sich dabei jeweils um die gleiche Länge von der Bodenebene (einem vorhandenen Fußboden, oder evtl. eine Montageplatte, oder eine Bodenplatte) bis zur Deckenebene erstrecken. Dies kann lot recht sein, also in einem 90°-Winkel zum Boden, oder auch (seltener) in einem anderen Winkel, z.B. zwischen 45° und 90°, etwa auch zwischen 70° und 90°. Es ist beispielsweise zweckmäßig, wenn die Träger erster Art lotrecht orientiert sind. Die Träger erster Art erstrecken sich bis zu einer Deckenebene, welche eine gedachte Ebene sein kann, oder welche auch eine Decke als Bauteil umfassen kann.

Die Träger zweiter Art dagegen sollen sich erfindungsgemäß über verschiedene Längen erstrecken. Es kann sein, dass einige Träger zweiter Art genauso lang sind wie die Träger erster Art. Die Träger zweiter Art sollen sich über mindestens zwei verschiedene Längen erstrecken, so dass mindestens ein Träger zweiter Art kürzer ist als ein anderer Träger zweiter Art. Es kommt auch in Frage, dass sich die Träger zweiter Art über eine große Vielzahl verschiedener Längen erstrecken. In der Regel ist es zweckmäßig, wenn jeweils ein Paar von Trägern zweiter Art gleich lang sind. In der Regel ist es zweckmäßig, wenn mindestens ein Träger zweiter Art oder alle Träger zweiter Art kürzer sind als die Träger erster Art.

Mindestens ein Träger zweiter Art (zweckmäßigerweise auch mindestens zwei oder mehr Träger zweiter Art) sollen zur Befestigung eines Heizelementes dienen. Dieses mindestens eine Heizelement soll eine oder die Wärmequelle für die Wärmekabine sein. Dabei kann ein vollständiges Heizelement mit dem oder den Trägern zweiter Art verbunden werden. Es kommt auch in Betracht, dass Träger zweiter Art in das Heizelement integriert sind. Beispielsweise können solche Träger (im Ganzen oder zumindest abschnittsweise) Seitenwände des Heizelementes bilden und dann zusätzlich auch als Befestigungselement dienen.

Im Rahmen der vorliegenden Erfindungen ist es ebenfalls zweckmäßig, wenn alle Träger zweiter Art ebenfalls lotrecht orientiert sind. Die Träger zweiter Art können dann zweckmäßigerweise an den Trägern erster Art befestigt werden. Durch ihre jeweils angepasste Länge können die Träger zweiter Art aber ihrerseits adäquate Stütz- und Befestigungsmöglichkeiten für Objekte verschiedener Länge bilden. Wie schon erläutert, können solche Träger zweit er Art zweckmäßigerweise zur Befestigung mindestens eines Heizelementes eingesetzt werden. Es kommt aber auch in Frage, dass mindestens eine Seitenwand durch einen Träger zweiter Art gehalten wird.

Im Rahmen der vorliegenden Erfindung hat es sich als zweckmäßig erwiesen, wenn die Träger zweiter Art aus einem anderen Material als die Träger erster Art bestehen. In dieser Weise lassen sich die Träger erster Art und die Träger zweiter Art besonders an ihre jeweiligen Verwendungszwecke anpassen. Beispielsweise ist es sinnvoll, wenn sowohl die Träger erster Art als auch die Träger zweiter Art jeweils aus Met all gefertigt sind. Dabei können die Träger erster Art aus einem ersten Met all bestehen und die Träger zweiter Art aus einem zweiten Met all, welches weicher ist als das erste Met all. Ein Met all, das weicher ist, soll im Zweifel in einer Härteprüfung nach Vickers mindestens um einen Messwert von 10 N weicher sein als das andere Met all.

Insbesondere ist es zweckmäßig, die Träger erster Art aus Stahl zu fertigen und die Träger zweiter Art aus Aluminium zu fertigen. Besonders zweckmäßig ist es, die Träger erst er Art aus gebogenen Stahlblechabschnitten zu fertigen und die Träger zweiter Art aus massivem Aluminium.

Die Träger erst er Art haben im hohen Maße eine statische Aufgabe, sie sollen eine Art Gerüst bilden, das sich von der Grundebene bis zur Deckenebene erstreckt, und ggfs. auch eine Deckenfläche trägt. Stahlblech hat hierzu die erforderliche Festigkeit und Stützkraft. Im Übrigen ist es gut möglich, aus gebogenem Stahlblech vorteilhafte Profile zu bilden. Beispielsweise können Profile gebildet werden, an denen die Träger zweiter Art gut befestigt werden können.

Aus Stahl oder Stahlblech gefertigte Träger erster Art können jedoch nur schwer gekürzt werden. Ein wesentlicher Vorteil der Erfindung ist, dass die Träger erster Art aber zur Herstellung einer Wärmekabine auch nicht gekürzt werden müssen. Ihre Länge kann einheitlich von der Bodenebene bis zur Deckenebene reichen. Dies ist insbesondere dann ein Vorteil, wenn eine solche Wärmekabine nicht industriell gefertigt wird, sondern handwerklich. Ein Handwerker oder auch ein Heimwerker, der vor Ort etwa eine Sauna aufbaut, muss dann die Träger erster Art vor Ort nicht kürzen.

Die besonderen Vorteile der erfindungsgemäßen Kabine zeigen sich insbesondere im Vergleich mit einer traditionellen Saunakonstruktion. Auch diese kann leicht durch einen Handwerker aufgebaut werden. Da bei der Sauna aber überwiegend Holzteile zum Einsatz kommen, ist die Kürzung sämtlicher Teile vor Ort ohnehin keine Schwierigkeit. Eine klassische Saunakonstruktion wird aber als Rahmenkonstruktion aufgebaut. Das heißt, wenn die Sauna etwa quaderförmig ist, verlaufen die stabilen Stützbalken nur entlang der Kanten dieses Quaders. Eine sehr belastbare und torsionsfähige Kabine lässt sich so nicht erzeugen. Insbesondere ist es häufig nicht möglich, eine flächenmäßig große Kabine sicher aufzustellen (etwa mit mehr als 10 Quadratmetern) oder auch eine flexible Innenausstattung vorzusehen. Beispielsweise würde ein mittig auf einer Wand platzierter großer Bildschirm von den an den Wandkanten vorgesehene Stützen nicht notwendig sicher getragen werden können. Das Vorsehen einer Vielzahl von Trägern erster Art hat also auch für die flexible Innenausstattung erhebliche Vorteile. Insbesondere wenn auch Übungselemente montiert werden sollen, etwa Aufhängungen für Übungsbänder (in der Regel sogenannte *TRX-*Bänder), ist eine stabile und torsionsfreie Kabinenkonstruktion, welche dennoch leicht vor Ort aufgebaut werden kann, von großem Nutzen.

Anders als die Träger erster Art können Träger zweiter Art, wenn sie etwa aus einem weicheren Metall gefertigt werden, leicht gekürzt werden. So kann bei einem handwerklichen Aufbau, etwa einer Sauna, vor Ort leicht eine Anpassung der Träger zweiter Art erreicht werden. Selbst wenn die Träger zweiter Art industriell vorgefertigt werden, ergeben sich Vorteile, da die Träger zweiter Art in jedem Fall leicht in erforderlichen Längen zur Verfügung gestellt werden können. Im Übrigen ist der Aufbau der Wärmekammer intuitiver, wenn die Träger erster Art alle gleich lang sind und so der Aufbau insgesamt nicht komplex ist.

Es ist zweckmäßig, wenn eine Vielzahl von Trägern zweiter Art oder auch alle Träger zweiter Art von den Trägern erster Art gehalten werden. Die Träger zweiter Art können von den Trägern erster Art durch direkte oder indirekte Verbindung gehalten werden, in aller Regel gibt es mindestens eine Kontaktfläche zwischen Trägern zweiter Art und den Trägern erster Art. Die Träger zweit er Art sind zweckmäßigerweise an den Trägern erster Art zu befestigen. Dies kann beispielsweise durch eine Verschraubung geschehen, häufig in günstiger Weise auch durch Karosserieschrauben. Dabei können in den Trägern zweiter Art Löcher vorgebeugt sein, Karosserieschrauben für einen guten Halt, insbesondere in Stahlblechen. Es ist auch möglich, dass ein anderes mechanisches Verbindungssystem eingesetzt wird. Beispielsweise können die Träger zweiter Art Aufnahmen aufweisen, die sich in Haken an Trägern erster Art einhängen lassen. Alternativ käme auch eine Verklebung der Träger in Betracht.

Die Wärmekammer soll durch mindestens ein Heizelement beheizt werden. Dieses Heizelement kann zweckmäßigerweise als flacher Quader vorgesehen werden, welcher sich bündig zwischen zwei Trägern erster Art einfügen lässt. Das Heizelement kann eigene Seitenwände aufweisen, beispielsweise als Holz- oder Kunststoffflächen gefertigt. Es ist auch möglich, geeignete Träger zweiter Art, welche beispielsweise als Aluminiumprofil flache Abschnitte ent halten können, als Seitenwand zu verwenden. Zweckmäßig ist daher ein Heizelement, bei dem mindestens eine oder aber zwei oder auch vier Seitenwände (im Ganzen oder zumindest abschnittsweise) durch Träger zweiter Art gebildet werden. Zweckmäßig ist ebenfalls ein Heizelement, welches Seitenwände aufweist, die aber fest mit Trägern zweiter Art verbunden sind. Ein solches Heizelement ist daher einbaufertig und kann leicht eingebaut werden, in dem die Träger zweiter Art mit den Trägern erster Art verbunden werden.

Besonders vorteilhaft ist, dass sich die Träger zweiter Art besonders leicht an die Größe des Heizelementes oder genauer an die Länge seiner Seitenwände anpassen lassen. Diese Anpassung würde mit den Trägern erster Art nur bedingt gelingen. Zum einen ist beispielsweise Stahl schwer zum Kürzen, zum andern aber ist die Länge der erforderlichen Träger durch den Abstand zwischen Bodenebene und Deckenebene vorgegeben. Es ist daher vorteilhaft, dass die Länge der Träger zweiter Art ohne Rücksicht auf den Abstand zwischen Bodenebene und Deckenebene angepasst werden kann.

Besonders zweckmäßig ist es auch, wenn mindestens ein Träger zweiter Art zur Befestigung eines Wandpaneels dient. Bei einem solchen Paneel kann es sich beispielsweise um ein Paneel für eine Innenwand oder für eine Außenwand handeln. Es kann auch zweckmäßig sein, alle Wandpaneele mit Trägern zweiter Art zu befestigen.

Die Wärmekabine kann als Wandpanelle Außenpanelle und Innenpaneele aufweisen. Die Innenpaneele bilden gemeinschaftlich wesentliche Teile der Innenwände, und die Außenpaneele bilden gemeinschaftlich wesentliche Teile der Außenwände. Die Paneele können dabei im Wesentlichen jeweils zwischen zwei Trägern erster Art angeordnet werden. Sowohl die Innenpaneele als auch die Außenpaneele können dabei die Träger erster Art verdecken, so dass eine glatte Oberfläche entsteht. Träger zweiter Art können dann sowohl zur Befestigung eines oder aller Innenpaneele dienen und ferner zur Befestigung eines oder aller Außenpaneele.

Die bündige Wandgestaltung, welche durch den Einsatz von Trägern zweiter Art in Kombination mit Trägern erster Art ermöglicht wird, ist ästhetisch sehr angenehm. Dabei entsteht ein Innenraum, in dem sich der Nutzer wohl fühlt, was ja beispielsweise für den Aufenthalt in einer Sauna, welcher insgesamt Erholungszwecken dient, wünschenswert ist.

Darüber hinaus erlaubt es die bündige und fast fugenlose Anbringung von Innenpaneelen, dass die Innenwände der Wärmekabine auch als Projektionsfläche genutzt werden kann. Dies ist ein spezifischer technischer Vorteil. Die Projektionsfläche kann nämlich dazu dienen, relevante Nutzungsdaten, wie etwa die Kabineninnentemperatur oder auch die Nutzungsdauer, einzublenden. Ferner können Unterhaltungsprogramme eingeblendet werden, etwa Video- oder Fernsehprogramme. Darüber hinaus können, wenn in der Kabine Sport- oder Rehabilitationsübungen stattfinden sollen, Anleitungen für solche Übungen auf die Innenwände projiziert werden.

Es ist möglich, ein Außenpaneel, welches einem bestimmten Innenpaneel gegenüberliegt, mit gleichen Trägern zweiter Art zu befestigen. Es kann ebenfalls zweckmäßig sein, gegenüberliegende Innen- und Außenpaneele jeweils mit verschiedenen Trägern zu befestigen.

In dieser Hinsicht ist es auch zweckmäßig, wenn die Träger erster Art symmetrisch zu einer Mittelebene zwischen Außenpaneelen und Innenpaneelen sind. Die symmetrischen Träger erster Art lassen sich dann von außen wie von innen gleich gut mit Trägern zweiter Art kombinieren.

Sowohl die Innenwände als auch die Außenwände einer erfindungsgemäßen Wärmekabine können neben Heizelementen (welche in der Regel allerdings nur innen vorgesehen sind) und Paneelen auch Glasscheiben aufweisen. Es ist zweckmäßig, wenn ein Träger zweiter Art auch zur Befestigung einer Glasscheibe dient. Es ist ferner zweckmäßig, wenn alle vorgesehenen Glasscheiben mit Trägern zweiter Art befestigt sind. In Fortsetzung der Innenpanelle und der Außenpaneele können auf der Innenseite und auf der Außenseite Glasscheiben vorgesehen sein. Die Wärmekabine weist dann sozusagen eine Doppelverglasung auf. Eine solche Doppelverglasung kann durch Gaskassetten zwischen Trägern erster Art zur Verfügung gestellt werden.

Es ist zweckmäßig, wenn die Träger zweiter Art eine Aufnahmenut aufweisen, welche Innenpanelle und/oder Außenpaneele und/oder Glasscheiben aufnehmen können. Zusätzlich ist es zweckmäßig, wenn die Träger zweiter Art ein Profil aufweisen, bei dem senkrecht zur Nutrichtung ein relativ langes Flachstück vorhanden ist, das beispielsweise als Seitenwand oder Seitenwandabschnitt für ein Heizelement dienen kann. Über ein solches Flachstück lassen sich im Einzelfall auch innen angebrachte Träger zweiter Art und außen angebrachte Träger zweiter Art miteinander verbinden. Dadurch können die Träger noch besser befestigt werden.

Zweckmäßig ist es auch, wenn mindestens ein Träger erster Art der Wärmekabine auf einem Bodenelement steht, welches eine Höhenverstellung des Trägers erster Art gegenüber der Bodenebene ermöglicht. Ein solches Bodenelement kann mit dem Träger verbunden sein oder es kann als separates Bauteil zur Verfügung gestellt werden. Statisch vorteilhaft ist, wenn das Bodenelement nicht Teil eines Wandelements oder mit diesem verbunden ist. Zweckmäßigerweise geschieht die Höhenverstellung über ein Gewinde, das sich direkt oder indirekt gegenüber dem Boden abstützt.

Es hat sich im Rahmen der vorliegenden Erfindung als vorteilhaft erwiesen, wenn das Bodenelement zwei Stützelemente umfasst, welche im Querschnitt eine U-Form haben. Die Schenkel des einen U's weisen dabei nach oben, die des anderen U nach unten. Durch entsprechende Bemaßung können die U-Formen ineinandergreifen.

Das untere U-förmige Stützelement kann ein Gewinde zu Höhenverstellung aufweisen. Das Stützelement kann das Gewinde schützend in seinem Innern aufnehmen. Das obere U-förmige Stützelement kann direkt oder indirekt den Träger abstützen.

Das Gewinde des unteren U-förmigen Stützelements kann eine Gewindestange oder ein ähnliches Element aufnehmen, mit dem sich eine Höhenverstellung bewirken lässt. Die Gewindestange oder das ähnliche Element kann sich auf einer Stützplatte abstützen, welche auch zusätzlich durch Führungen, z.B. Führungsstangen geführt wird. Vorteilhaft ist auch, wenn das Bodenelement durch Paneele der Wärmekabine verdeckt wird.

Zweckmäßig ist es auch, wenn die Wärmekabine eine zusätzliche Trägerkonstruktion, eine Art Portal, aufweist. Dieses Portal kann sichtbar sein oder unsichtbar in den Wänden integriert sein. In diesem Sinne ist eine Wärmekabine zweckmäßig, welche eine erste Seitenwand, eine gegenüberliegende zweite Seitenwand und ein Deckenelement aufweist. Das Deckenelement soll die erste Seitenwand mit der zweiten Seitenwand verbinden. Ferner soll in der ersten Seitenwand ein erster Träger dritter Art vorgesehen sein, in der zweiten Seitenwand ein zweiter Träger dritter Art vorgesehen sein, und dem Deckenelement ein dritter Träger dritter Art vorgesehen sein, wobei der erste Träger, der zweite Träger und der dritte Träger miteinander verbunden sind. Dazu kann der dritte Träger mit den anderen Trägern direkt oder indirekt verbunden sein, er kann auf den anderen Trägern aufliegen und/oder an diesen verfestigt sein, z.B. mechanisch, insbesondere verschraubt. Der dritte Träger kann auch einstückig mit den anderen Trägern ausgeführt sein, dann ergibt sich ein integrales Protal-Bauelement.

Der dritte Träger kann dabei von gleicher Art wie der Träger erster Art oder der Träger zweiter Art sein. In der Regel werden die Träger dritter Art allenfalls von gleicher Art wie die Träger erster Art sein. Noch zweckmäßiger ist es aber häufig, Träger dritter Art zu nehmen, welche sich von den Trägern erster Art und zweiter Art unterscheiden, welche also insbesondere aus einem anderen Material gefertigt sind oder ein anderes Profil aufweisen. Die drei Träger dritter Art bilden also eine Art U-Form, bei der der Verbindungsschenkel entlang (oder meist in) der Decke verläuft. Dieses nach unten geöffnete U aus drei Trägern wird hierin auch als Portal bezeichnet. Durch dieses Portal wird die Kabine insgesamt stabilisiert. Die Position der ersten und der zweiten Seitenwände wird gestützt, ferner erfährt die Decke eine zusätzliche Stützung. Allerdings ist eine solche Stützung im Rahmen der vorliegenden Erfindung in der Regel gar nicht erforderlich.

Darüber hinaus jedoch kann das Portal dazu genutzt werden, daran und insbesondere an dem zweiten Träger eine Aufhängung vorzusehen. Insbesondere dann, wenn die Wärmekabine zu Trainingszwecken eingesetzt wird, kann eine solche Aufhängung für Trainingsgeräte genutzt werden. Ein zweckmäßiges Trainingsgerät, welches an einer zentralen Aufhängung des zweiten Trägers dritter Art befestigt werden könnte, ist ein Übungsband; auch als *TRX-B*and bezeichnet.

Obwohl die Kabine insbesondere durch den Einsatz der Träger erster Art an sich schon sehr stabil ist, hat die zusätzliche Stärkung durch das Portal große Vorteile. Dabei ist zu bedenken, dass eine hinreichende Stabilität nicht nur in objektiver Hinsicht, also sozusagen für den Statiker, bestehen sollte, sondern auch in subjektiver Hinsicht. Das heißt, ein Nutzer, der mit großer Kraft Übungen ausführt, soll dies mit vollem Vertrauen in die Aufhängung eines Trainingsgerätes, in der Regel also eines Übungsbandes, tun können. Schon ein leichtes Durchbiegen der Decke kann dieses Vertrauen erschüttern. Daher erweist sich ein Portal selbst dort, wo es objektiv gar nicht erforderlich ist, als sehr zweckmäßig.

Die vorliegende Erfindung betrifft auch ein Verfahren zur Herstellung eines Satzes von Bauelementen, welche sich zu einer modularen Wärmekabine zusammensetzen lassen. Anders ausgedrückt geht es also um ein Verfahren zur Herstellung eines Bausatzes. Das entsprechende Verfahren soll, vorzugsweise in der Reihenfolge der Aufzählung, folgende Schritte umfassen:
a. Zurverfügungstellen von Trägern erster Art einer einheitlichen Länge
b. Zurverfügungstellen von Trägern zweiter Art
c. Zurverfügungstellen eines Heizelementes
d. Verbinden der Träger zweiter Art mit einem Heizelement
e. Zurverfügungstellen von Paneelen

Im Rahmen dieses Verfahrens ist es zweckmäßig, wenn die Träger zweiter Art mit einer einheitlichen Länge zur Verfügung gestellt werden. Das Kürzen von Trägern zweiter Art kann ein Schritt in dem Verfahren sein. Im Rahmen dieses Verfahrens ist es auch zweckmäßig, wenn zusätzlich zum Zurverfügungstellen von Paneelen auch eine Tür zur Verfügung gestellt wird, und wenn ferner auch Glaselemente zur Verfügung gestellt werden. Es kann auch zweckmäßig sein, das Heizelement vorab mit den Trägern zweiter Art zu verbinden und es so zur Verfügung zu stellen.

Ferner ist ein Verfahren zum Errichten einer Wärmekabine erfindungsgemäß. Dieses Verfahren soll, vorzugsweise in der Reihenfolge der Aufzählung, folgende Schritte umfassen:
a. Zurverfügungstellen von Trägern erster Art einer einheitlichen Länge
b. Zurverfügungstellen von Trägern zweiter Art
c. Zurverfügungstellen eines Heizelementes
d. Verbinden eines Heizelementes mit Trägern zweiter Art
e. Zurverfügungstellen von Paneelen
f. Aufstellen der Träger erster Art
g. Verbinden der Träger zweiter Art mit Trägern erster Art
h. Verbinden von Paneelen mit Trägern zweiter Art

Vorzugsweise werden die Schritte im Zusammenhang und in der Reihenfolge ihrer Aufzählung ausgeführt. Das Verfahren ist (wie auch das zuvor beschriebene) auf die erfindungsgemäße Wärmekabine bezogen zu verstehen. Das heißt, Merkmale der Gestaltung der Wärmekabine sind analog auf das Verfahren zu übertragen, und Merkmale des Verfahrens sind analog auf Merkmale der Wärmekabine zu übertragen

Im Rahmen dieses Verfahrens kann ein Heizelement mit Trägern zweiter Art vor Ort verbunden werden. (Es handelt sich dann um ein i.d.R funktionstüchtiges aber teilweise unvollständiges Heizelement, nämlich um eines mit unvollständigen Seitenwänden.) Es kann aber auch in Frage kommen, wenn ein Heizelement fertig vorbereitet mit Trägern zweiter Art an den Aufstellungsort geliefert wird, an dem die Wärmekabine errichtet werden soll. Das Kürzen der Träger zweiter Art kann auch ein Schritt in dem Verfahren sein.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch:
- Fig. 1: ist eine Grundrissansicht einer erfindungsgemäßen Wärmekammer
- Fig. 2: zeigt eine Aufsichtsdarstellung aller Innenwände
- Fig. 3: zeigt einen Querschnitt durch einen Wandabschnitt
- Fig. 4: zeigt einen Querschnitt durch einen anderen Wandabschnitt
- Fig. 5: ist eine schematische perspektivische Darstellung einer erfindungsgemäßen Wärmekammer
- Fig. 6: ist eine schematische Querschnittsansicht des Bodenabschnittes eines Wandstücks

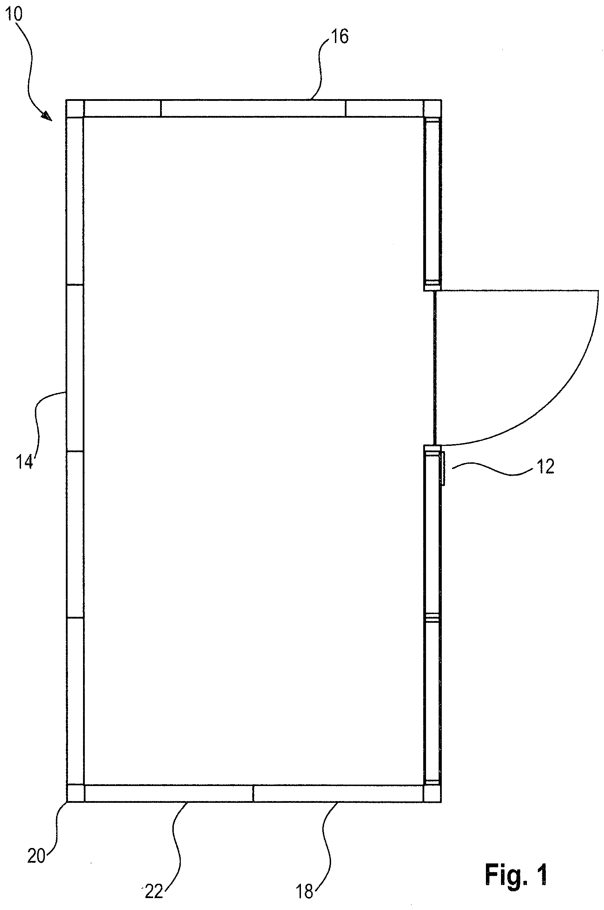

Fig. 1 zeigt in einer Grundrissdarstellung eine erfindungsgemäße Wärmekabine 10. Diese Wärmekabine umfasst eine erste Wand 12 und gegenüberliegend eine zweite Wand 14. Ferner ist eine dritte Wand 16 und gegenüberliegend eine vierte Wand 18 vorgesehen. Die Wand 12 kann als Vorderwand gelten, sie umfasst eine Tür. Die Wand 14 ist dementsprechend die Rückwand und die Wände 16 und 18 bilden Seit enwände.

Die Wand besteht aus verschiedenen Abschnitten. Die Ecken werden durch Träger erster Art 20 gebildet, beispielsweise den Träger 20 zwischen der zweiten Wand 14 und der viert en Wand 18. (Die Wände können weitere Träger erster Art umfassen, diese sind jedoch nicht dargestellt.) Die Wände weisen kassettenförmige Abschnitte auf. Beispielsweise weist die vierte Wand 18 die Wandkassette 22 auf.

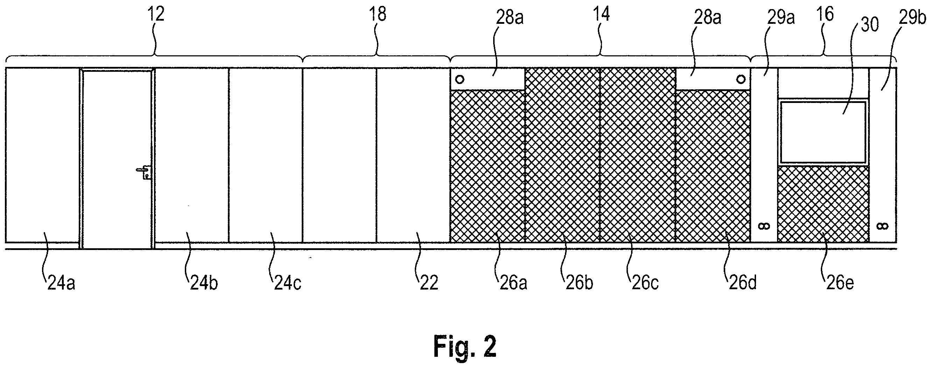

Fig. 2 zeigt die Innenansicht der Wände der Wärmekabine 10 aus Fig. 1. Es handelt sich sozusagen um eine in die Ebene abgerollte Aufsicht über 360°. An die erste Wand 12 schließt sich wiederum die vierte Wand 18, an diese die zweite Wand 14, und an diese die dritte Wand 16 an. In dieser Ansicht erkennt man aber die verschiedene Gestaltung und Beschaffenheit der Wände. Die erste Wand 12 besteht aus einer Glastür und aus drei Glaskassetten, den Kassetten 24a, 24b und 24c. Die Glaskassetten sind jeweils doppelglasig ausgeführt, so dass es eine Innenscheibe gibt und eine Außenscheibe. In Fig. 2 geht die Sicht jeweils auf die Innenscheibe. Die Kassettenform ist aber aus Fig. 1 erkennbar.

Die sich anschließende vierte Wand besteht aus zwei Wandkassetten. Der Übersichtlichkeit halber ist wieder die Wandkassette 22 bezeichnet, welche genau der Wandkassette 22 in Fig. 1 entspricht. Die zweite Wand 14 besteht ebenfalls aus mehreren Kassetten. Dieses Mal handelt es sich jedoch um Infrarot-Kassetten oder IR-Kassetten. Das heißt, die Wand besteht fast vollständig aus Heizelementen, welche Infrarotstrahlung abgeben und die Wärmekabine 10 aufheizen können. An die IR-Kassette 26a schließt sich eine Kassette 26b an, an diese die Kassetten 26c und 26d. Während die Wärmekassetten 26b und 26d jeweils die volle Wandhöhe ausfüllen, also vom Boden bis zur Decke reichen, sind die IR-Kassetten 26a und 26d kürzer. Oberhalb dieser Kassetten befindet sich jedenfalls ein Lüftungseinsatz. Der Lüftungseinsatz besteht aus einem Wandpaneeleinsatz und darin angebrachte Öffnungen. Diese sind im Detail nicht sichtbar, werden aber durch die jeweils runde Öffnung in den Lüftungseinsätzen 28a und 28b angedeutet. Es können selbstverständlich auch eine Vielzahl von runden Lüftungsöffnungen oder Lüftungsöffnungen anderer Form vorgesehen sein, ebenso Lüftungsschlitze oder dergleichen.

Aus der Gestaltung der zweiten Wand ergibt sich, dass bei konstanter Raumhöhe, also bei konstantem Abstand zwischen Boden und Decke der Wärmekabine, ein Bedarf nach Innenelementen verschiedener Höhe bestehen kann. Im Fall der zweiten Wand wird die Höhe zweier IR-Kassetten durch die oben vorgesehenen Lüftungseinsätze begrenzt, so dass diese Kassetten weniger hoch sind als die benachbarten Kassetten (26b und 26c). Es ist daher durchaus vorteilhaft, die Wärmekabine so aufzubauen, dass solche Anpassungen in der Höhe leicht möglich sind.

Auch in der dritten Wand 16 besteht das Bedürfnis, Wandeinsätze in verschiedener Höhe vorzusehen. In diesem Fall ist in der Wand 16 die IR-Kassette 26e vorgesehen. Sie reicht vom Boden etwa bis zur Wandmitte. Oberhalb der IR-Kassette 26e ist der Bildschirm 30 angeordnet. Ein solcher Bildschirm kann zu Unterhaltungszwecken genutzt werden, etwa zum Fernsehen. Er kann auch relevante Nutzungsinformationen einblenden, wie beispielsweise die Nutzungsdauer oder die Kabinentemperatur. Ferner könnten auf dem Bildschirm 30 auch Anleitungen zu Übungen eingeblendet werden, sofern Übungen in der Wärmekabine stattfinden sollen. Oberhalb des Bildschirms ist ein nicht näher bezeichnetes Wandpaneel vorgesehen. Auch bei der Gestaltung der dritten Wand 16 zeigt sich, dass es sehr vorteilhaft ist, Elemente und Paneele von verschiedener Höhe einbauen zu können.

Links des Bildschirms 30 befinden sich die Versorgungskassetten 29a und 29b. Diese sorgen dafür, dass bei der in der Regel nicht frei wählbaren Bildschirmgröße, die dritte Wand 16 eine der gegenüberliegenden vierten Wand 18 entsprechende Größe hat. Diese Versorgungskassetten und ihre Innen- und Außenpaneele dienen auch der Abdeckung elektrischer Einrichtungen, im unteren Bereich sind dement sprechend zwei Steckdosen angedeutet.

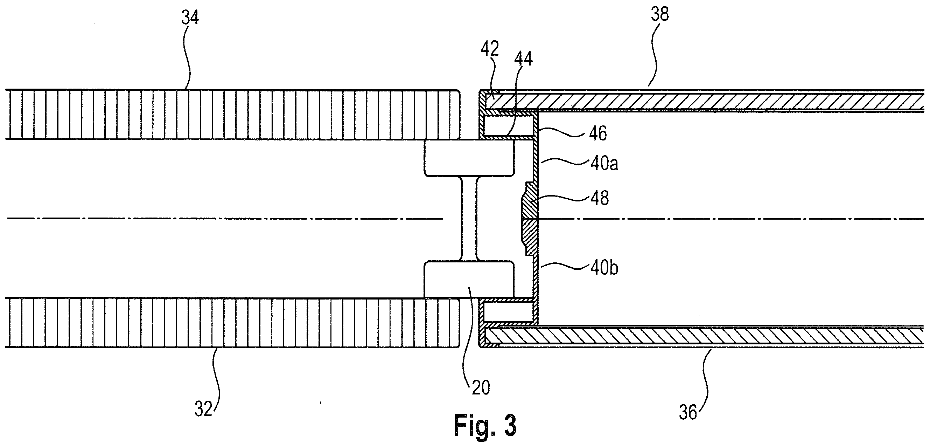

Fig. 3 zeigt eine Querschnittsansicht durch eine Wand, die bei einer erfindungsgemäßen Wärmekabine 10 zum Einsatz kommen kann. Bei der in Fig. 1 und Fig. 2 dargestellten Kabine befinden sich analoge Übergänge, allerdings nicht exakt diese Anordnung. Die Abbildung zeigt einen Träger erster Art, der in der Aufsicht dieser Schnittdarstellung ein im Wesentlichen schienenförmiges Profil hat. An diesen Träger erster Art können unmittelbar Wandpaneele montiert werden. In diesem Falle ist ein Innenpaneel 32 montiert sowie gegenüberliegend ein Außenpaneel 34. Die Anordnung ist vollständig symmetrisch zur Mittelachse (strichpunktiert dargestellt). Auch der Träger erster Art ist symmetrisch zu dieser Achse. Allgemein ist es vorteilhaft, wenn der Träger erster Art mindestens eine Symmetrieachse aufweist, vorzugsweise auch zwei Achsen (in diesem Fall ferner eine Achse senkrecht zur Mittelachse).

Der Träger erster Art trägt auch eine Glaskassette. Diese Glaskassette besteht aus einer Glasscheibe 36, welche ins Innere der Kabine zeigt, und eine Glasscheibe 38, welche Teil des Kabinenäußeren ist. Die Glasscheiben sind mit Hilfe eines Trägers zweiter Art montiert. Der Träger zweiter Art 40a trägt die Glasscheibe 38. Dazu gehört eine Kante der Scheibe 38, die von der Nut 42 des Trägers zweiter Art 40a gehalten wird. Der Träger weist im Übrigen eine Kontakt wange 44 auf. Diese Kontakt wange kann am Träger erster Art 20 montiert werden.

Die Montage der Kontaktwange kann auf vielfältiger Weise erfolgen, beispielsweise mechanisch oder durch Verklebung. Zur mechanischen Verbindung können Karosserieschrauben oder dergleichen verwendet werden (wie diese auch zur Befestigung der Wandpaneele in Betracht kommen). Es können aber auch Paare von Befestigungsmitteln verwendet werden, wie beispielsweise Haken und Ösen und dergleichen.

Der Träger zweiter Art 40a weist ferner die Seitenwange 46 auf. Die Seitenwange weist ihrerseits das Verbindungsstück 48 auf. Mit diesem Verbindungsstück kann der Träger 40a mit dem symmetrisch aufgebauten Träger 40b verbunden werden. Dazu können im Verbindungsstück beispielsweise Nuten vorgesehen werden, in welchen eine Verbindungslippe eingeführt wird. Denkbar wäre auch wiederum eine mechanische Verbindung, durch formschlüssig ineinandergreifende Teile, oder Schrauben, usw. Ebenfalls wäre eine Verklebung von zwei aufeinanderliegenden Verbindungsstücken 48 denkbar.

Die Anordnung ist ebenfalls zur Mittelebene vollständig symmetrisch. Um eine Gewichtsersparnis bei den Trägern zweiter Art 40 vorzusehen, und auch um mehr Befestigungsmöglichkeiten anzubieten, können diese Hohlräume aufzeigen, wie beispielsweise den angrenzend an die Kontaktwange 44 gezeigten Hohlraum.

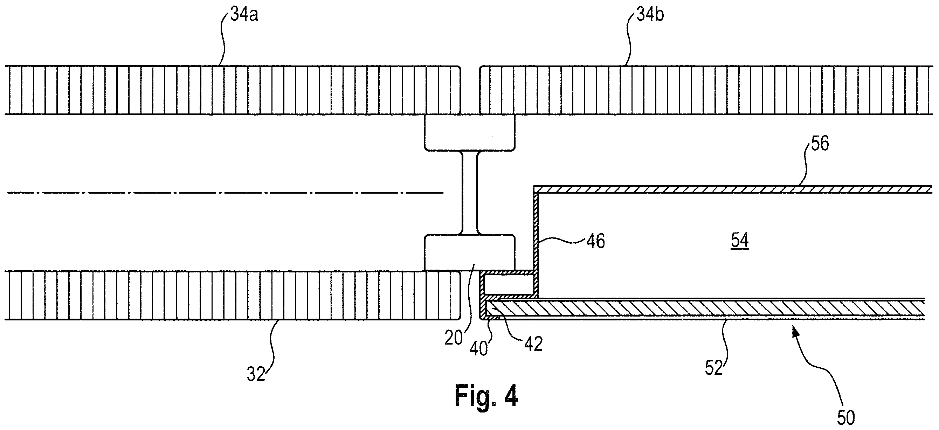

Fig. 4 zeigt in einer Querschnittsdarstellung, die derjenigen aus Fig. 3 entspricht, einen anderen Wandabschnitt, wie er ebenfalls in einer erfindungsgemäßen Wärmekabine vorkommen kann. Zentral ist wieder der Träger erster Art 20 angeordnet. Links vom Träger befindet sich das Innenpaneel 32. Ihm gegenüberliegend ist das Außenpaneel 34a angeordnet. Rechts neben dem Außenpaneel 34a ist ein Außenpaneel 34b angeordnet. Das Innenpaneel 32 und die Außenpaneele 34a und 34b sind direkt am Träger erster Art 20 montiert.

Bündig mit dem Wandpaneel 32 ist rechts daneben ein Heizelement 50 angeordnet. Dieses Heizelement umfasst eine Frontplatte 52, dahinter den Innenraum 54 und die Rückwand 56. Im Innenraum 54 können geeignete Heizelemente angeordnet werden. In Betracht kommt insbesondere eine Heizmatte, welche parallel zur Frontplatte 52 angeordnet werden kann und auch an dieser befestigt werden kann.

Das Heizelement 50 wird durch einen Träger zweiter Art 40 gehalten. Dieser weist die Nut 42 auf, welche die Frontplatte 52 tragen kann. Der Träger zweiter Art weist auch die Seitenwange 46 auf, welche als Seitenwand des Heizelementes 50 dienen kann.

Man erkennt an dieser Darstellung auch gut, dass ein Träger zweiter Art 40 verschiedene Elemente tragen kann. Beispielsweise kann der Träger 40, wie in Fig. 3 gezeigt, auch als Träger für eine Glasplatte dienen. Wenn es um das Tragen eines Heizelementes 50 geht, ist die Möglichkeit, die Seitenwange 46 als Seitenwand zu nutzen, besonders vorteilhaft.

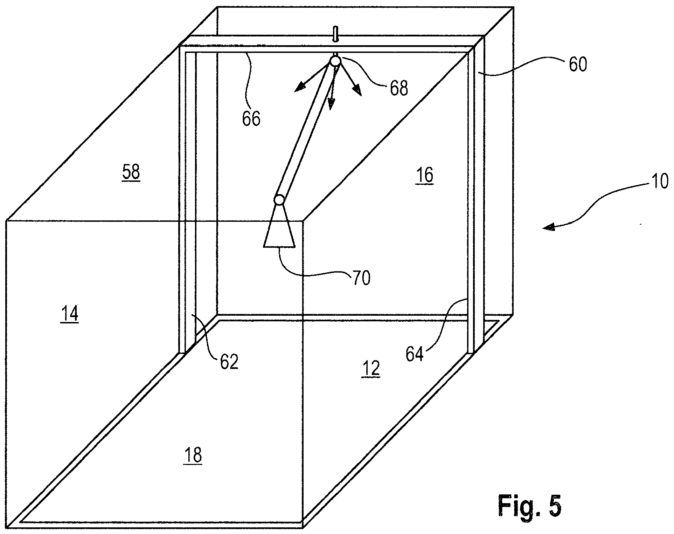

Fig. 5 zeigt in einer schematischen perspektivischen Darstellung eine andere erfindungsgemäße Wärmekabine 10. Diese umfasst wiederum eine erste Wand 12, eine gegenüberliegende zweite Wand 14, eine dritte Wand 16 und eine gegenüberliegende vierte Wand 18. Diese Wärmekabine 10 hat zusätzlich eine Decke 58. Ferner weist die Kabine das Portal 60 auf. Dieses Portal besteht aus einem ersten Träger 62, welcher lotrecht vom Boden zur Decke verläuft. Gegenüberliegend ist ein zweiter Träger 64 angeordnet, welcher in entsprechender Weise vom Boden zur Decke verläuft. Die Träger 62 und 64 sind mit dem dritten Träger 66 verbunden, welcher in der Deckenfläche verläuft. Der Träger 66 hält seinerseits das Befestigungselement 68. An einem solchen Befestigungselement können Hilfsmittel für Übungen vorgesehen sein. Dies könnte beispielsweise ein Boxsack sein, oder auch, wie dargestellt, ein Übungsband 70. Solche Bänder werden auch als "TRX-Bänder" vermarktet.

In dem Fall, dass eine Wärmekabine nicht als Sauna, sondern als Trainingsraum für Übungen bei erhöhter Temperatur verwendet wird, ist ein solcher Befestigungspunkt in der Decke besonders vorteilhaft. Das Portal 60 erlaubt, einen sehr stabilen Befestigungspunkt an der Decke vorzusehen. Es ist nicht unwichtig, dass nicht nur objektiv eine hinreichende statische Belastbarkeit gegeben ist, sondern auch der Nutzer dies auch subjektiv so empfindet. Dazu kann es angemessen sein, ein statisch gar nicht erforderliches Maß an Biegungssteifheit vorzusehen. Im Übrigen bietet das Portal 60 auch eine zusätzliche Stärkung der Kabinenstatik insgesamt, sowohl für die Seitenwände als auch für die Decke 58.

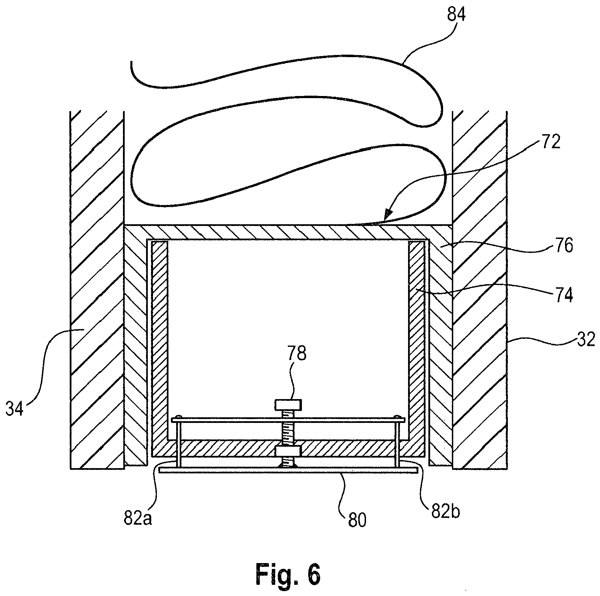

Fig. 6 zeigt in einer vertikalen Querschnittsansicht ein Innenpaneel 32 und ein Außenpaneel 34 im Bodenbereich. Zwischen den Paneelen ist das Bodenelement 72 angeordnet. Dieses umfasst ein unteres Stützelement 74 und ein oberes Stützelement 76. Beide Stützelemente sind u-förmig und greifen ineinander. Im unteren Stützelement 74 ist das Gewindeelement 78 vorgesehen, in diesem Fall als einfaches Gewinde mit einer oben angeordneten Verstellmutter. Das Gewindeelement kann durch Drehung nach unten ausgefahren oder wieder eingefahren werden. Dementsprechend kann das untere Stützelement 74 gegenüber dem Boden angehoben werden. Damit wird auch das obere Stützelement 76 angehoben. Mit diesem Element zusammen werden die Wandpaneele angehoben. Dabei kann das obere Stützelement 76 direkt mit den Wandpaneelen 32 und 34 verbunden sein. Es kann auch indirekt auf die Wandpaneele einwirken, in dem es die Höhe eines Trägers erster Art 20 gegenüber dem Boden verändert.

Das Gewindeelement 78 wirkt auf die Stützplatte 80 ein. In dem die Stützplatte 80 gegenüber dem unteren Stützelement 74 verschoben wird, wird ihre Höhe verändert. Um eine saubere Führung sicher zu stellen, sind zusätzlich zum Gewindeelement 78 noch Führungsstäbe 82a und 82b vorgesehen.

In diesem Querschnitt ist ebenfalls sichtbar, dass zwischen dem Innenpaneel 32 und dem Außenpaneel 34 ein Dämmmaterial 84 vorgesehen ist.

Insgesamt erkennt man aus dieser Beschreibung, wie sich mit Hilfe dieser Erfindung eine Wärmekabine herstellen lässt, welche sich sehr effizient, insbesondere auch durch einen Handwerker vor Ort, aufbauen lässt, sich aber dennoch sehr verschiedenen Anforderungen anpassen lässt.

### Bezugszeichenliste

- 10: Wärmekabine
- 12: erst e Wand
- 14: zweit e Wand
- 16: dritte Wand
- 18: vierte Wand
- 20: Träger erst er Art
- 22: Wandkassette
- 24: Glaskassette
- 26: IR-Kassette
- 28: Lüftungseinsatz
- 29: Versorgungskassette
- 30: Bildschirm
- 32: Wandpaneel/ Innenpaneel
- 34: Wandpaneel/Außenpaneel
- 36: Glasscheibe (innen)
- 38: Glasscheibe (außen)
- 40: Träger zweiter Art
- 42: Nut
- 44: Kontaktwange
- 46: Seit enwange
- 48: Verbindungsstück
- 50: Heizelement
- 52: Front platte
- 54: Innenraum
- 56: Rückwand
- 58: Kabinendecke
- 60: Portal
- 62: erster Träger
- 64: zweiter Träger
- 66: dritter Träger
- 68: Befestigungselement
- 70: Übungsband/TRX-Band
- 72: Bodenelement
- 74: unteres Stützelement
- 76: oberes Stützelement
- 78: Gewindeelement/Gewindestange
- 80: Stützplatte
- 82: Führungsstab
- 84: Dämmmaterial

## Patentansprüche

1. Wärmekabine (10), welche modular aufgebaut ist und eine Vielzahl von Trägern erster Art (20) und von Trägern zweiter Art (40) und eine Vielzahl von Paneelen (32; 34) umfasst und welche sich von einer Bodenebene zu einer Deckenebene erstreckt, wobei sich die Träger erster Art (20) über eine jeweils gleiche Länge von der Bodenebene bis zur Deckenebene erstrecken und sich die Träger zweiter Art (40) über verschiedenen Längen erstrecken und mindestens ein Träger zweiter Art zur Befestigung eines Heizelementes (50) dient.

2. Wärmekabine (10) nach dem vorhergehenden Anspruch, bei der alle Träger erst er Art (20) lotrecht orientiert sind.

3. Wärmekabine (10) nach einem der vorhergehenden Ansprüche, bei der alle Träger zweiter Art (40) lotrecht orientiert sind.

4. Wärmekabine (10) nach einem der vorhergehenden Ansprüche bei der die Träger zweiter Art (40) aus einem anderen Material als die Träger erster Art (20) bestehen.

5. Wärmekabine (10) nach einem der vorhergehenden Ansprüche, bei der die Träger erster Art (20) aus einem ersten Metall bestehen und die Träger zweiter Art (40) aus einer zweiten Met all best ehen, welches weicher ist als das erst e Met all.

6. Wärmekabine (10) nach einem der vorhergehenden Ansprüche, bei der die Träger zweiter Art (40) von den Trägern erster Art (20) gehalten werden.

7. Wärmekabine (10) nach einem der vorhergehenden Ansprüche, bei der ein Heizelement (50) vorgesehen ist, welches Seitenwände aufweist und bei dem mindestens eine Seitenwand (46) durch einen Träger zweiter Art (40) gebildet wird oder eine solchen umfasst.

8. Wärmekabine (10) nach einem der vorhergehenden Ansprüche, bei mindestens ein Träger zweiter Art (40) zur Befestigung eines Wandpaneels (32; 34) dient.

9. Wärmekabine (10) nach dem vorhergehenden Anspruch, welche Außenpaneele (34) und Innenpaneele (32) aufweist und bei der mindestens ein Träger zweiter Art (40) zur Befestigung eines Innenpaneels (32) dient und mindestens ein Träger zweiter Art (40) zur Befestigung eines Außenpaneels (34) dient.

10. Wärmekabine (10) nach einem der vorhergehenden Ansprüche, bei der mindestens ein Träger zweiter Art (40) zur Befestigung einer Glasscheibe dient.

11. Wärmekabine (10) nach einem der vorhergehenden Ansprüche, bei der mindestens ein Träger erster Art (20) auf einem Bodenelement (72) steht, welches eine Höhenverstellung des Trägers erster Art (20) gegenüber der Bodenebene ermöglicht.

12. Wärmekabine (10) nach einem der vorhergehenden Ansprüche, welche eine erste Seitenwand (12), eine gegenüberliegende zweite Seitenwand (14) und ein Deckenelement (58) aufweist, welches die erste Seitenwand (12) mit der zweiten Seitenwand (14) verbindet und bei der in der ersten Seitenwand (12) ein erster Träger dritter Art (64) vorgesehen, in der zweiten Seitenwand (14) ein zweiter Träger dritter Art (62) vorgesehen ist und in dem Deckenelement (58) ein dritter Träger dritter Art (66) vorgesehen ist und der erste Träger (62), der zweite Träger (64) und der dritte Träger (66) miteinander verbunden sind.

13. Verfahren zur Herstellung eines Satzes von Bauelementen, welche sich zur einer modularen Wärmekabine (10) zusammensetzen lassen, welches folgende Schritte umfasst:
a. Zurverfügungstellen von Trägern erster Art (20) einer einheitlichen Länge
b. Zurverfügungstellen von Trägern zweiter Art (40)
c. Zurverfügungstellen eines Heizelementes (50)
d. Verbinden der Träger zweiter Art (20) mit einem Heizelement (50)
e. Zurverfügungstellen von Paneelen (32; 34)

14. Verfahren zum Errichten einer Wärmekabine (10), welches folgende Schritte umfasst:
a. Zurverfügungstellen von Trägern erster Art (20) einer einheitlichen Länge
b. Zurverfügungstellen von Trägern zweiter Art (40)
c. Zurverfügungstellen eines Heizelementes (50)
d. Verbinden eines Heizelementes (50) mit Trägern zweiter Art (40)
e. Zurverfügungstellen von Paneelen (32; 34)
f. Aufstellen der Träger erster Art (20)
g. Verbinden der Träger zweiter Art (40) mit Trägern erster Art (20)
h. Verbinden von Paneelen (32; 34) mit Trägern zweiter Art (40)
